Europäisches Patentamt

European Patent Office

Office européen des brevets

(19)

(11) Publication number: **0 135 936**
A2

# (12) EUROPEAN PATENT APPLICATION

(21) Application number: 84111554.6

(22) Date of filing: 27.09.84

(51) Int. Cl.⁴: **B 01 D 53/04**, C 01 B 13/02

(30) Priority: 29.09.83 US 537309

(43) Date of publication of application: 03.04.85
Bulletin 85/14

(84) Designated Contracting States: BE DE FR GB NL SE

(71) Applicant: AIR PRODUCTS AND CHEMICALS, INC.,
Route no. 222, Trexlertown Pennsylvania 18087 (US)

(72) Inventor: Kratz, Wilbur Clymer, 7057 Heater Road,
Macungie, PA 18062 (US)
Inventor: Sircar, Shivaji, 1508 Bogie Avenue,
Wescosville, PA 18106 (US)

(74) Representative: Sandmair, Kurt, Dr. Dr. et al,
Patentanwälte Dr. Berg Dipl.-Ing. Stapf Dipl.-Ing.
Schwabe Dr. Dr. Sandmair
Postfach 86 02 45 Stuntzstrasse 16,
D-8000 München 86 (DE)

(54) Production of oxygen enriched air.

(57) A pressure swing adsorption process is provided for the direct production from ambient air of a moderately enriched oxygen product gas. The production of a product gas having an oxygen concentration of 23 to 30% is effected by a three step cycle wherein (1) the feed air is charged to a bed of nitrogen selective adsorbent until the bed is brought from atmospheric pressure to a pressure in the range of up to 4 atmospheres, (2) reducing the bed pressure to an intermediate level by withdrawal of oxygen enriched product gas therefrom and (3) finally venting the bed to restore atmospheric pressure. By an alternative mode including a fourth step of purging the bed following the venting step, a product of 23 to 45% oxygen concentration is obtained.

0135936

211-P-US02855

## PRODUCTION OF OXYGEN ENRICHED AIR

### BACKGROUND OF THE INVENTION

The present invention relates to separation of gases by selective adsorption and is particularly concerned with the recovery from ambient air of an industrially useful gas product of enriched oxygen content.

### PRIOR ART

In U.S. Patent 4,013,429, there is a discussion of various systems disclosed in prior patent literature for fractionation of air by selective adsorption. In general, these prior art processes usually employ a column containing a bed of adsorbent selective for retention of nitrogen, through which bed the feed air is passed, with the discharge therefrom of a primary effluent highly enriched in oxygen. Regeneration of the nitrogen-loaded bed is carried out by pressure reduction and/or purging the bed with a gas stream. The aim of these prior art processes is to obtain a product stream of high oxygen content, greater than about 80% $O_2$, and the steps of the process and operating conditions are designed to attain this end. The oxygen recovery (defined as oxygen actually recovered as enriched air as a percentage of total oxygen in the air feed) for such high enrichment processes have been in the order of about 40%. Operation of a high-enrichment process in a way so as to obtain a product of lower oxygen content leads to even lower recovery efficiency.

0135936

As examples of such prior art process employing an initial high pressure in the adsorption step and a pressure near atmospheric during nitrogen desorption (PSA), reference is made to U.S. Patents Nos. 2,944,627 and 3,717,974.

In other described prior art processes, desorption of nitrogen from the bed is carried out at subatmospheric pressure (VSA), as exemplified by U.S. Patents Nos. 3,796,022; 4,013,429; 4,129,424 and 4,168,149.

The favored adsorbents for selective retention of nitrogen are commercially available synthetic zeolites such as type A, type X and mordenites. In most of the prior art processes, provision is made for removal of water and $CO_2$ from the feed air before its introduction into the nitrogen sorption bed.

While there are a number of applications where highly oxygen-enriched air is required or desired, there are also certain industrial processes in which enriched air of lower oxygen concentration can be and is employed. Thus, in combustion processes of various kinds and in chemical and biochemical reactors, air containing in the range of about 23 to 45% $O_2$ is utilized. Such moderately oxygen-enriched air is obtained by the addition of relatively pure oxygen in liquid or gaseous state to an ambient air stream. While such approach is technically satisfactory, it is relatively costly and may be economically undesirable in certain applications which would otherwise benefit from the use of such moderately oxygen-enriched air products.

Among the objects of the present invention is to provide a simple and economical process for production from ambient air of a useful oxygen-enriched product gas of controlled moderate oxygen concentration, at high oxygen recovery efficiency.

0135936

## SUMMARY OF THE INVENTION

In accordance with the invention, there may be produced from ambient air by selective adsorption techniques an oxygen-enriched gas product having an oxygen content of 23 to 50 volume percent. In practice of the invention, a largely simplified adiabatic pressure swing adsorption cycle (PSA) is employed. The process is operated by admitting the feed air into one end of a column containing a bed of nitrogen-selective adsorbent until the column is brought from atmospheric pressure to a pressure of several atmospheres. The column pressure is then reduced to an intermediate pressure level, by removing enriched air from the opposite end of the column. Then the column pressure is further reduced to atmospheric by venting through the initial air inlet end, thus completing the cycle and preparing the column for repetition of the cycle sequence. By such modest operation, there is obtained an oxygen-enriched product gas of 23-26% oxygen content, with recovery of about 75 to 85% of the oxygen from the feed air.

An oxygen-enriched product gas of higher oxygen content as that containing up to 50% oxygen is obtained by including an added step in the cycle sequence. Following the venting of the column, the bed is purged with part of the oxygen enriched air product. Alternatively, it has been found advantageous in certain instances to operate the process of the invention under conditions such as to obtain from ambient air an enriched effluent having up to about 30 to 50% oxygen, which can then be simply diluted with ambient air to obtain a mixed product gas of lower oxygen content as in the desired range of 23 to 35% $O_2$.

## BRIEF DESCRIPTION OF THE DRAWINGS

In the accompanying drawings:

Figure 1 is a diagrammatic flow sheet of a system suitable for practice of the invention for the production from ambient air of a gas product having an oxygen content of 23 to 30%;

Figure 2 is a diagrammatic flow sheet of a system for practice of the invention for the production from ambient air of a gas product having an oxygen content of over 23 to 50%;

Figure 3 is a series of graphs showing (a) the weight amount of oxygen produced from the feed air per unit amount of adsorbent at various levels of oxygen purity and (b) the oxygen recovery from feed air at these $O_2$ purity levels; and

Figure 4 is a diagrammatic flow chart of an alternative embodiment of the invention.

## DETAILED DESCRIPTION

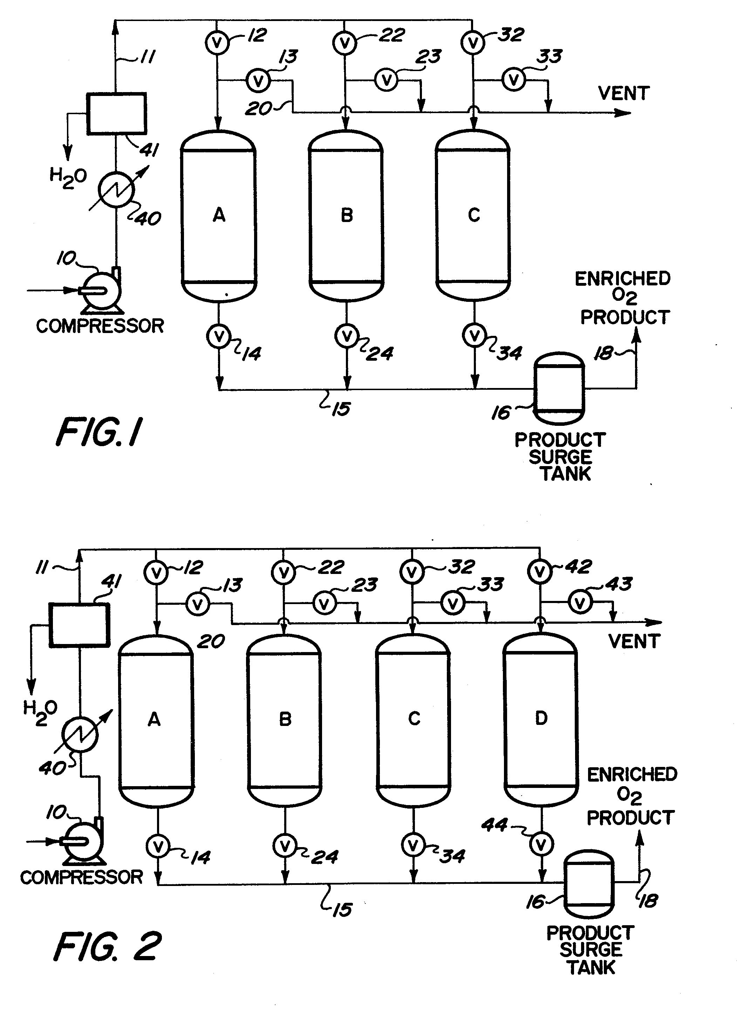

While not limited thereto, the illustrated embodiment in Figure 1 shows three adsorbent columns designated A, B and C operated in parallel. The feed air is compressed at 10, cooled to near ambient temperature in water cooler 40, passed through a knockout drum 41 for removal of condensed water and is passed via line 11 into a selected one of the columns then on stream. Each of the columns is packed with two layers of adsorbent. The layer at the feed end will remove water and at least part of the carbon dioxide from the feed air. Any of the known adsorbents generally used for this purpose may be employed, such as type A or type X molecular sieve zeolite, alumini, silica gel and activated carbon. For the contiguous second layer, there may be employed any of the known adsorbents selective for retention of nitrogen, such as synthetic mordenite, or type A or type X molecular sieve zeolite, which may be exchanged with various cations.

0135936

Assuming that Column A is to receive the influent air feed, Column A will be initially at atmospheric pressure. With valve 12 open and valves 13 and 14 closed, introduction of compressed air into Column A will be continued as a first step until a designed superatmospheric pressure level is reached in the column, which pressure level may be up to about 10 atmospheres, preferably in the range of 1.5 to 4 atmospheres. In the next step of the cycle sequence, valve 12 is closed and valve 14 opened, whereby a primary effluent enriched in oxygen is withdrawn from Column A and passed via line 15 into a collection vessel 16 serving as a product surge tank from which tank the enriched product gas may be withdrawn for desired use via line 18. Withdrawal of product from Column A is continued until the pressure therein is reduced to a preset, intermediate level above atmospheric.

When the designed intermediate pressure level is attained, valve 14 is closed and valve 13 is opened, whereby Column A is vented to atmospheric pressure, the residual gas being desorbed and discharged via line 20. Column A is then ready for repetition of the sequence of operations with readmission of ambient air thereto.

The process steps for Columns B and C, in turn, follow the identical sequence as described for Column A in offset relation. The positions of the valves associated with the particular columns of a 3 column system are shown in Table 1 based on a 90-second operating cycle, in which feed gas is continuously introduced to and enriched gas continuously withdrawn from the system.

### TABLE 1

| Time | Columns | | | Valves | | | | | | | | |
|------|---|---|---|----|----|----|----|----|----|----|----|----|
| Sec. | A | B | C | 12 | 13 | 14 | 22 | 23 | 24 | 32 | 33 | 34 |
| 0-30 | Ad | D2 | D1 | O | C | C | C | O | C | C | C | C |
| 30-60 | D1 | Ad | D2 | C | C | O | O | C | C | C | O | C |
| 60-90 | D2 | D1 | Ad | C | O | C | C | C | O | O | C | C |

C = Close        Ad = Adsorption
O = Open         D1 = First depressurization
                     D2 = Second depressurization

While Table 1 shows a 90-second three-step cycle, it will be understood that longer or shorter operating cycles may be employed as from about 30 to 120 seconds equally timed for (1) nitrogen adsorption, (2) depressurizing to intermediate pressure level and (3) venting to atmospheric pressure.

The described 3-step cycle can be employed for enriching ambient air to an oxygen content of 23 to 30%. Although the process is described for a three column system, by proper sizing of the surge vessel, it can be carried out with only one or two columns.

The embodiment shown in Figure 2 can be employed for the production of an enriched product gas having an oxygen content of over 23 to 50%. For this purpose, an additional step is employed in the cycle wherein the on-stream column is purged following the venting step. The adsorbent packing in each of the columns is the same as that previously described.

The four columns in the Figure 2 embodiment are labeled A through D. As before, referring to Column A, that column is initially at atmospheric pressure. The pressure in the column is increased to the designed superatmospheric level (1.5 to 4

0135936

atmospheres) by introducing compressed feed air at near ambient temperature, after removal of condensed water, through open valve 12, with valves 13 and 14 being closed.   Then the pressure is reduced to an intermediate level above atmospheric, by withdrawing product enriched air through opened valve 14, with valves 12 and 13 being closed.   The enriched product gas passes into tank 16 or from another column producing it via line 15.   In the third step of the cycle the pressure in Column A is reduced to atmospheric by venting residual gas from the bed through valve 13, with valves 12 and 14 closed. Following the venting, as a final step in the cycle, Column A is purged with enriched air withdrawn from the product surge tank 16, or from another column producing it via line 15 and passed through column A by way of open valves 14 and 13 to vent.

The purge step desorbs more $N_2$ from the column and sharpens the adsorption mass transfer zone and produces a product gas of higher oxygen content in the following adsorption step of the next repeated cycle.   The process sequence for columns B, C and D is the same but the steps are offset so that the product production step and the air feed step are continuous throughout the cycle.   The valve sequences for the four bed system are shown in Table 2.   Here again, the process could be carried out with one to three columns by utilizing a product surge vessel of appropriate size.

0135936

<div align="center">

**TABLE 2**

</div>

| Time | Columns | | | | Valves | | | | | | | | | | | |
|---|---|---|---|---|---|---|---|---|---|---|---|---|---|---|---|---|
| Sec. | A | B | C | D | 12 | 13 | 14 | 22 | 23 | 24 | 32 | 33 | 34 | 42 | 43 | 44 |
| 0-30 | Ad | P | D2 | D1 | O | C | C | C | O | O | C | O | C | C | C | O |
| 30-60 | D1 | Ad | P | D2 | C | C | O | O | C | C | C | O | O | C | O | C |
| 60-90 | D2 | D1 | Ad | P | C | O | C | C | C | O | O | C | C | C | O | O |
| 90-120 | P | D2 | D1 | Ad | C | O | O | C | O | C | C | C | O | O | C | C |

C = Close      Ad = Adsorption
O = Open      D1 = First depressurization
                            D2 = Second depressurization
                            P = Purge

In the four step cycle as well as in the three step cycle the temperature range for the process can be 10 to 60°C. Also the four-step cycle may be carried out in a shorter or longer time period than 120 seconds as in the range of 30 to 960 seconds, with equal time for each of the four steps.

<div align="center">

**Example 1**

</div>

In an experimental run operated in the three-step mode, each of the adsorbent beds employed was 4 inches (10.16 cm) in diameter and 16 ft. (4.88 meters) long. The layer of adsorbent for $CO_2$ and water removal in each bed was 14 pounds (6.35 kg.) of type X molecular sieve and that of the nitrogen retaining layer was 42 pounds (19 kg.) of the same zeolite. The column was initially brought from atmospheric pressure to 3 atmospheres by admitting 7.3 SCF (20% liters) of ambient air. The column pressure was then reduced from 3 atmospheres to 1.7 atmospheres by withdrawal of 5.1 SCF (144 liters) of enriched air, which had an oxygen content of 25 volume percent. Finally, the column pressure was reduced to atmospheric by venting

0135936

and the cycle repeated. 83% of the oxygen content of the feed air was recovered in the enriched gas product.

## Example 2

In an experimental run employing the four step mode of operation, the bed size and adsorbent layers were the same as in the foregoing example. In the initial adsorption step the column pressure was increased from atmospheric to 3 atmospheres by introduction of 7.3 SCF (207 liters) of air feed. Then the pressure was reduced to 2 atmospheres by withdrawal of enriched product gas; following which the column was vented to a pressure of one atmosphere. Finally, the beds of adsorbent were purged with enriched gas product withdrawn from the surge vessel. The enriched product rate obtained was 4.0 SCF (113.0 liters) per bed and the enriched air purity was 28.0% oxygen. The oxygen recovery from the feed air in the enriched product gas was 73%.

It has been found that in certain combustion processes higher flame temperatures are required than that which can be obtained with ambient air. Such higher flame temperatures have been attained with modest increases in the oxygen content of the air employed. For these and other processes employing oxygen-containing gas, combustion efficiency can be more than doubled by enriching the air utilized from the normal 21% oxygen to levels in the order of 25 to 35% oxygen. Heretofore, such oxygen enriched gas was obtained by the addition of pure oxygen. The admixture of pure oxygen is relatively expensive and is regarded by some potential users as hazardous. The present invention provides a simple and economically attractive route for directly obtaining from ambient air moderately enriched gas for industrial use.

0135936

containing up to 45% $O_2$. In addition to use of such enriched gas in the usual combustion processes, these may be beneficially employed in various oxidation processes used in chemical and biochemical reactors.

While an oxygen enriched product of 23-26% $O_2$ can be obtained directly from ambient air by operation of the three step process sequence of Figure 1 and Table 1, it has been found more efficient economically to employ the process sequence of Figure 2 and Table 2 to produce an oxygen enriched product effluent of over 26% $O_2$ and up to about 30-45% $O_2$ and to dilute the obtained effluent product with atmospheric air to provide an oxygen-enriched product of desired oxygen concentration in the 23-26% range.

## Example 3

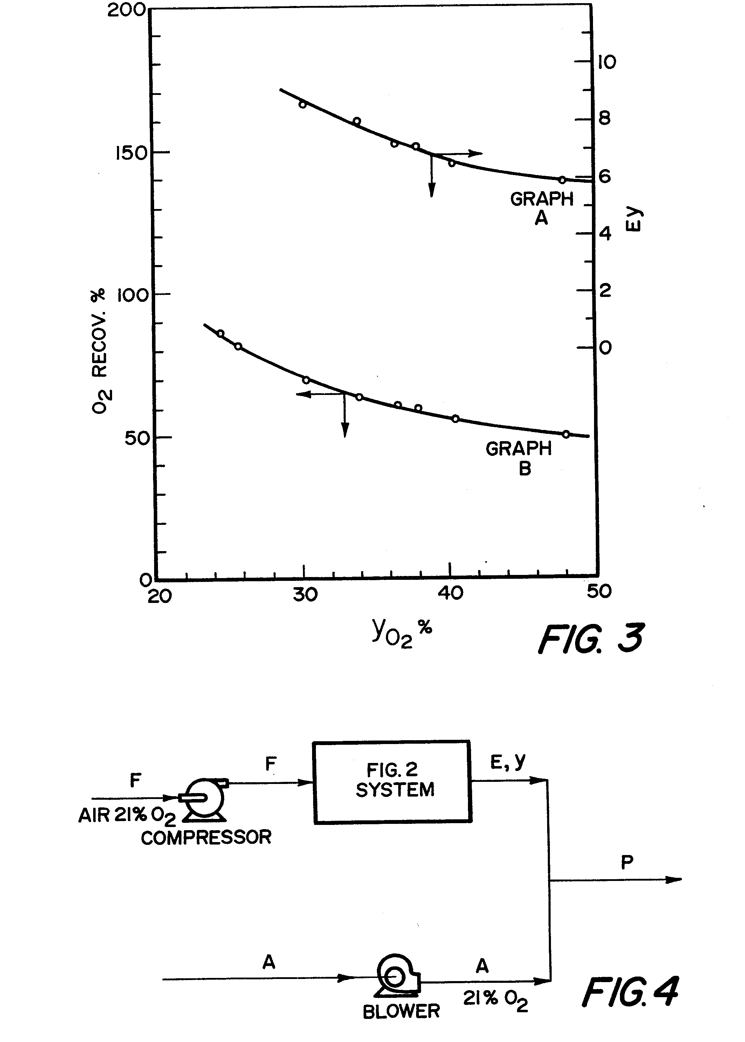

A number of individual runs were made, as shown in Figure 3 under conditions to produce oxygen-enriched products in accordance with the invention, having progressively increased oxygen concentration from about 25% to 48% and the percent of oxygen recovered plotted at each concentration as shown in Graph B of Figure 3. These operations were carried out at 21°C and at an attained on-stream pressure of 40 psig, using a $CO_2$-free dry air feed. The pressure let-down level was adjusted and the purge time was increased from run to run to obtain increased oxygen enrichment.

Graph A of Figure 3 records the amount of zeolite adsorbent utilized in terms of pound moles of contained oxygen produced per hundred thousand pounds of the adsorbent in the bed.

The mixing of ambient air with the oxygen enriched effluent from the adsorption process is diagrammatically illustrated in Figure 4. Ambient air F is compressed to a desired pressure of several atmospheres and charged to a selective adsorption system such as illustrated in Figure 2, obtaining an oxygen enriched product E having an oxygen concentration of over 26%. The desorbed waste gas W and purge gas are vented from the column. To obtain a final product P of desired oxygen concentration ambient air A (containing 21% oxygen) is admixed in suitable amount to provide the desired oxygen concentration.

### TABLE 3

### MATERIAL AND ENERGY BALANCE ACCORDING TO
### FIGURE 4 TO PRODUCE 25% OXYGEN AIR

| y, % $O_2$ | R ($O_2$ Recovery) in Oxy-rich | A/ P | F/ P | E/ P | KWH lb mole of P | lbs Adsorbent per bed/P |
|---|---|---|---|---|---|---|
| 0.25 | 0.84 | 0 | 1.42 | 1.0 | 0.52 | 2332 |
| 0.30 | 0.71 | 0.56 | 0.89 | 0.44 | 0.44 | 1511 |
| 0.40 | 0.56 | 0.79 | 0.72 | 0.21 | 0.42 | 1253 |
| 0.50 | 0.48 | 0.86 | 0.68 | 0.14 | 0.43 | 1169 |

Table 3 shows the material and energy balance according to Figures 3 and 4 to produce a product of 25% $O_2$ concentration utilizing an oxygen enriched effluent of 30, 40, and 50% $O_2$ to which ambient air is added, as compared to a directly produced product of 25% $O_2$. The table shows the amount of oxygen (R) recovered from the adsorption process at the several levels of oxygen concentration, the proportions of added ambient air (A/P) and oxygen-enriched effluent (E/P) used to make 25% $O_2$ product; the quantity of feed air (F/P) employed to

0135936

produce P, the total energy required in KWH per pound mole of product, and the amount in pounds of nitrogen retaining adsorbent used in production of the product of 25% $O_2$ concentration.

As seen from Table 3 there is a 25% reduction in overall energy requirement and 50% reduction in adsorbent inventory, if the enrichment process is employed to produce 40% oxygen gas and diluted back to 25% $O_2$ concentration as compared to direct production of 25% $O_2$ enriched gas.

While Table 3 relates particularly to operation of the process of the invention under conditions to obtain an oxygen enriched effluent of 30 to 50% oxygen concentration and diluting the effluent with ambient air to obtain a final gas product of 25% $O_2$ concentration, it will be understood that other desired products in the range of about 25 to 35% $O_2$ can similarly be prepared by proportioning the quantity of ambient air added to an oxygen-enriched gas stream produced in accordance with the invention.

What is Claimed:

1.   The method of obtaining from ambient air of a product stream having a moderately enriched oxygen concentration, which comprises to steps of:

(1)   introducing the feed air into a bed of adsorbent selective in retention of nitrogen to increase the pressure in that bed from atmospheric to a higher level not in excess of about 10 atmospheres,

(2)   then reducing the bed pressure to an intermediate level above atmospheric by withdrawing from the bed and collecting an oxygen enriched product gas,

(3)   and thereafter venting the bed to restore atmospheric pressure therein.

2.   The method according to Claim 1 wherein said withdrawal of oxygen enriched product gas is carried out in a flow direction concurrent with that of initial introduction of feed air into the bed.

3.   The method of Claim 2 wherein the venting of the bed is carried out in a flow direction counter to that of said withdrawal of oxygen enriched product gas.

4.   The method of Claim 1 wherein the initial introduction of feed air into the bed is continued until said bed reaches a pressure level in the range of 1.5 to 10 atmospheres.

5.   The method of Claim 1 wherein the initial introduction of feed air is continued until said bed reaches a pressure level of about 3 atmospheres.

0135936

6. The method of Claim 5 wherein the pressure level is reduced from about 3 atmospheres to about 1.7 atmospheres by the withdrawal of oxygen enriched product gas from the bed.

7. The method of Claim 1 wherein the initial introduction of feed air into the bed is continued until said bed reaches a pressure level in the range of 1.5 to 4 atmospheres, after which the bed pressure is reduced by withdrawal of oxygen enriched product gas therefrom to an intermediate pressure level such that said enriched product gas has an oxygen content in the range of 23 to 26%.

8. The method of Claim 1 wherein said feed air prior to its introduction into said bed of nitrogen selective adsorbent is passed through a contiguous layer of sorbent effective in removal of water and at least part of the $CO_2$ from the feed air.

9. The method of Claim 1 wherein following said venting of the bed to atmospheric pressure, it is purged with part of the oxygen enriched product gas.

10. The method as defined in Claim 9 wherein the introduction of feed air into the bed is continued until said bed reaches a pressure level in the range of 1.5 to 4 atmospheres, after which the bed pressure is reduced by withdrawal of oyxgen enriched product gas therefrom to an intermediate level such that said enriched product gas has an oxygen content in the range of 23 to 50%.

11. The method of Claim 9 wherein the introduction of feed air is continued until said bed reaches a pressure level of 3 atmospheres, after which the pressure is reduced to the intermediate level of 2 atmospheres by withdrawal of oxygen enriched product gas therefrom.

12.  The method of Claim 9 wherein the defined operation is carried out in a system comprising four adsorbent bed-containing columns operated stepwise in parallel, such that feed of ambient air to the system and withdrawal of oxygen enriched product gas from the system is continuous.

13.  The method of Claim 9 wherein the defined operation is carried out in a cycle of 40-960 seconds, one-fourth of which time each respectively is devoted in sequence to the steps of (1) adsorption of nitrogen from the feed air, (2) depressuring the bed to intermediate pressure level by withdrawal of oxygen enriched product gas therefrom, (3) venting the bed to atmospheric pressure and (4) purging with collected oxygen enriched product gas.

14.  The method of Claim 1 wherein the defined operation is carried out in a system comprising three adsorbent bed-containing columns operated stepwise in parallel, such that feed of ambient air to the system and withdrawal of oxygen-enriched product gas from the system is continuous.

15.  The method of Claim 1 wherein the defined operation is carried out in a cycle of 30-720 seconds, one-third of which time each respectively is devoted in sequence to the steps of (1) adsorption of nitrogen from the feed air, (2) depressuring the bed to intermediate pressure level by withdrawal of oxygen enriched product gas therefrom and (3) venting the bed to atmospheric pressure for start of the next cycle.

16.   The method of producing from ambient air an oxygen-enriched product gas having an oxygen concentration in the range of 23 to 35% $O_2$, which comprises:

(a)   passing ambient air at superatmospheric pressure into a bed of adsorbent selective in retention of nitrogen to increase the pressure in that bed from atmospheric to a higher level not in excess of about ten atmospheres,

(b)   then reducing the bed pressure to an intermediate level above atmospheric by withdrawing from the bed and collecting an oxygen enriched product gas,

(c)   thereafter venting the bed to restore atmospheric pressure therein,

(d)   and then purging the bed with part of the oxygen enriched product gas, prior to repeating the sequence starting with step (a);

thereby obtaining an enriched product gas having an oxygen concentration in the range of above 25% and up to about 50% $O_2$, and diluting said enriched product gas to the desired oxygen concentration in the range of 23 to 35% $O_2$ by admixture of ambient air therewith.

0231P

FIG. 1

FIG. 2

FIG. 3

FIG. 4